# EUROPEAN PATENT APPLICATION

(11) **EP 4 707 328 A1**
(43) Date of publication of application: **11.03.2026**
(21) Application number: 24382959.5
(22) Date of filing: 06.09.2024
(51) Int. Cl.: C08J 9/00, B29C 44/34, C08J 9/12, B29C 44/08

(54) **METHOD OF PRODUCING A NANOCELLULAR POLYMER MATERIAL BY HIGH PRESSURE GAS DISSOLUTION FOAMING**

(71) Applicant: Cellmat Technologies S.L., 47011 Valladolid (ES); Hiperbaric, S.A., 09001 Burgos (ES)
(72) Inventor: MARTIN DE LEON, Judit, 47011 Valladolid (ES); BERNARDO GARCÍA, Victoria, 47011 Valladolid (ES); RODRIGUEZ PEREZ, Miguel Ángel, 47011 Valladolid (ES); DEL VAL ARMESTO, Marta, 47011 Valladolid (ES); LIZALDE ARROYO, Félix, 47011 Valladolid (ES); MÚGICA IZAGUIRRE, Mikel, 47011 Valladolid (ES); TONELLO SAMSON, Carole, 09001 Burgos (ES); BALLORCA JUEZ, Daniel, 09001 Burgos (ES); RUIZ ROMÁN, Ciro, 09001 Burgos (ES)
(74) Representative: Balder IP Law, S.L.

(57) **Abstract**

The present invention relates to a method of producing a nanocellular polymer material by gas dissolution foaming, comprising a first saturation step a) carried out at a first saturation temperature Tₛₐₜ₁ and a second saturation step b) carried out a second saturation temperature Tₛₐₜ₂ (which is below Tₛₐₜ₁) wherein both saturation steps a) and b) are carried out under pressure in the range of about 35 MPa to 600 MPa; followed by a third depressurization step c) of dropping the pressure of step b) and a foaming step d) of heating the saturated polymeric material of step c).

## Description

### TECHNICAL FIELD

The present invention refers to the technical field of nanocellular polymeric materials. More specifically, it relates to the manufacture of said nanocellular polymeric materials (also referred to as "nanocellular polymeric foam(s)" in this document) with a foaming agent by an improved multistage method which provides a double advantage: reducing the cycle time associated with the manufacture of these materials and, at the same time, controlling and optimizing the structure of them, thereby allowing the obtention of a nanocellular polymeric material with a reduction in the cell size and/or the density, which would consequently involve a notable reduction of its thermal properties and improvement of other properties, such as mechanical, optical or acoustical.

The method of the present invention comprises a sequence of two or more saturation steps at a pressure of about 35 MPa to about 600 MPa, preferably of about 50 MPa to about 400 MPa; more preferably of about 100 MPa to about 200 MPa, wherein temperature of the first saturation step is higher than the temperature of the second or further saturation steps. Once the polymeric material is deemed to be saturated, the system is abruptly depressurized and the saturated polymeric material is heated to permit the expansion of the foaming agent as described herein, thereby obtaining a nanocellular polymeric material with the above-mentioned controlled and optimized structure.

### STATE OF THE ART

Polymeric foam materials are present in almost all industrial sectors due to their excellent properties such as their low weight, high rigidity and strength, thermal and acoustic insulation, or impact energy absorption, among others. These properties are also combined with a low economic cost.

A new generation of polymer foams have been recently developed. They are the so-called nanocellular polymers, characterized by cell sizes within the nanometric range (below 1 micron).

The reduction of the cell size to the nanoscale leads to some improved and unusual properties in comparison with cellular materials with larger cell sizes. Nanocellular polymers present a confinement in both the gaseous and the solid phases [J. Martin de León, V. Bernardo, M.A. Rodriguez-Perez Nanocellular Polymers: From Microscale to Nanoscale, De Gruyter, 2024]. On one hand, the confinement of the gaseous phase implies a reduction in the gaseous conductivity. This effect is known as the Knudsen effect that results in a reduction of the total thermal conductivity of these materials. On the other hand, the solid phase is confined within the thin cell walls leading to an increase of the glass transition temperature and an improvement in the mechanical properties of such materials in comparison with microcellular polymers. In addition, the reduction of the cell size below 50 nm has been proved to lead to the production of transparent nanocellular materials and their high specific surface makes them useful for their use in filters, catalysts, sensors and adhesives. Moreover, acoustic insulation and dielectric properties are also modified by creating a nanocellular structure. Therefore, these materials have a unique combination of properties that make them very promising for demanding applications in a wide variety of industrial sectors such as aeronautic, automotive, construction, sports, defense, biotechnology, energy, etc.

Some of these applications are: thermal insulation panels for the building industry, thermal insulation materials for the aeronautic industry, for instance thermal insulation of liquid hydrogen tanks and the thermal insulation of the aircraft interior, thermal insulation materials for the automotive industry, transparent thermal insulating materials for the substitution or partial replacement of glass windows, light weight transparent and though materials for protection of electronic screens, light weight structural panels for different industrial sectors, light weight materials for the mitigation of shock waves in military applications and in sports, light-weight materials for packaging and body protection, acoustic insulators, filters for gases, liquids or solids, supports for catalysis, high surface area sensors for liquid and gases, dielectric materials, carriers for liquids, high surface area adhesives.

Due to the improved properties of these nanocellular polymers with respect to the conventional cellular polymers, there has been a significant increase in the investigation of this type of materials. Indeed, nanocellular polymers typically present low values of thermal conductivity which render them so attractive in thermal insulation applications. Nowadays, there is an increasing importance on carrying out studies aimed at improving the efficiency of materials used as thermal isolators *[*International Energy Agency (IEA), Technology Roadmap. Energy efficient building envelopes, (2013*)]* due to the toughening of environmental laws. To that end, one of the solutions involves replacing the materials that are currently used for this purpose with others which present much lower thermal conductivity and are more efficient, such as nanocellular polymers.

There is an increasing interest in the development and optimization of new methods of producing nanocellular polymers in an attempt to achieve a better control on their cellular structure. Some of the techniques of producing these nanocellular polymers are phase separation, printing lithography and foaming [B. Notario, J. Pinto, M.A. Rodriguez-Perez, Nanoporous polymeric materials: A new class of materials with enhanced properties. Prog. Polym. Sci. 78-79 (2016) 93-139]. Whereas phase separation and printing lithography are generally limited to producing films and they typically request the use of organic solvents that may be contaminants, foaming, particularly foaming by gas dissolution or batch foaming, is one of the most promising techniques. Some of the advantages of using batch foaming are that this technique allows a better control of the cell size and the homogeneity of the cellular structure of the nanocellular polymer material obtained. Furthermore, if inert gases such as CO₂ or N₂ are used, the process can be more environmentally friendly, since they are non-contaminating gases which can be extracted from the material without leaving any residue.

Among the different approaches of foaming, a great part of the research carried out on nanocellular polymers is performed by means of a batch production process (commonly referred to as batch foaming, gas dissolution foaming or solid-state foaming). In this process, polymeric samples of several mm thick are placed in a vessel (autoclave) into which gas is introduced at a given pressure and temperature [S. Costeux, CO2 -Blown Nanocellular Foams. J. Appl. Polym. Sci. 2015, 132*].* Once sufficient time for the gas to be diffused in the polymer (saturation process) has elapsed, the autoclave is abruptly depressurised. If the saturation process is performed at a relatively low temperature, once the autoclave is depressurised it is necessary to extract the sample from inside the autoclave and heat it for expansion and formation of the nanocellular polymer to take place.

The process of foaming by gas dissolution has also been disclosed in US4473665 A [J.E. Martini-Vvedensky et al.] and US10675792 B2 [P. Jacobs]*.* However, these references do not address the objective of achieving cells having a nanometric size, but to obtain cellular materials with cells higher than 1 micron. The methods provided by these patent documents are characterized by a saturation step with a pressure lower than 30 MPa and/or a subsequent pressure release (partial or total). After the pressure drop, the stability of the material is increased by cooling it.

Notwithstanding, batch foaming still presents some important technological challenges in order to be able to produce nanocellular polymeric materials, in particular those having a value of density and/or size of cell sufficiently low, which would consequently involve a notable reduction of the thermal conductivity and improvement of other physical properties such as mechanical, optical or acoustical. Indeed, it is necessary to obtain a great amount (about 10⁶ cells/cm³ to about 10¹³cells/cm³) of nucleation points in the starting solid polymeric material, which will subsequently become in the cells of the nanocellular polymeric material. Achieving these high nucleation densities is difficult. Two different strategies are commonly used to try to overcome this challenge: homogeneous or heterogeneous nucleation.

Homogeneous nucleation implies that nucleation points depend on the process conditions without adding a second active nucleating phase to the polymeric system. Increasing nucleation density by homogeneous nucleation can be in turn done by increasing the amount of gas dissolved in the polymeric material, that is, using processing conditions in which the solubility of the foaming agent in the polymeric material is higher. This can be achieved by increasing the pressure of the vessel [D. Miller, P. Chatchaisucha, V. Kumar, Microcellular and nanocellular solid-state polyetherimide (PEI) foams using sub-critical carbon dioxide I. Processing and structure, Polymer (Guildf). 50 (2009) 5576-5584]. With many polymers, an increase of solubility can also be achieved by reducing the temperature [H. Guo, V. Kumar, Some thermodynamic and kinetic low-temperature properties of the PC-CO2 system and morphological characteristics of solid-state PC nanofoams produced with liquid CO2, Polymer (Guildf). 56 (2015) 46-56]. Thus, the production of nanocellular polymer materials following this approach means working with saturation pressures (typically up to 30 MPa) and low temperatures. For instance, if the polymer is polymethylmethacrylate (PMMA), pressures as high as 30 MPa or temperatures lower than 0°C are required to obtain nanocellular polymeric foams [J. Pinto, M. Dumon, M. Pedros, J. Reglero, M.A. Rodriguez-Perez, Nanocellular CO2 foaming of PMMA assisted by block copolymer nanostructuration, Chem. Eng. J. 243 (2014) 428-435*;* J. Martin de-Leon, V. Bernardo, & M. A. Rodriguez-Perez, Low Density Nanocellular Polymers Based on PMMA Produced by Gas Dissolution Foaming: Fabrication and Cellular Structure Characterization. Polymers, (2016) 8(265), 1-16*,* J. Martin-de Leon, V. Bernardo, M.A. Rodriguez-Perez, Key Production Parameters to Obtain Transparent Nanocellular PMMA, Macromol. Mater. Eng. (2017) 1700343(1)-1700343(5*)*]. Homogeneous nucleation can also be carried out by increasing the thermodynamic instability of the polymeric material via depressurization of the foaming agent at a higher rate or increase of the temperature under pressure.

Alternatively, increasing the nucleation density via the heterogeneous nucleation can be done by adding second active phases that promote the nucleation process, wherein these second actives phases or nucleating agents need to be nanometric and be dispersed in a ratio above 10¹³ cells/cm³ in order to get a cell size at a nano scale. In this case, the nucleation process is at least partially controlled by the nucleating agents and, therefore, it is possible to work at less exigent conditions of pressure and temperature than those needed for homogeneous nucleation. These second active phases (also referred to as "nucleation agents") may be inorganic nanoparticles, copolymers or immiscible polymers. However, heterogeneous nucleation presents the drawback that the integration of these second active phases in the desired ratio is complex and, it further limits some of the applications of the nanocellular polymers such as the manufacture of semitransparent materials.

Moreover, one of the main drawbacks of using batch foaming overall in conventional vessels, which typically work at pressures lower than 30 MPa, is the long cycle time needed to get a given foaming agent absorbed in a solid polymeric material of several mm of thickness. For instance, cycle times of up to 15 days are necessary to saturate a solid polymeric material having 4 mm of thickness via homogeneous nucleation at low temperatures of -32°C [J. Martin-de Leon, V. Bernardo, M.A. Rodriguez-Perez, Key Production Parameters to Obtain Transparent Nanocellular PMMA, Macromol. Mater. Eng. (2017) 1700343(1)-1700343(5*)],* since the diffusivity of the system is reduced as the temperature decreases. Also, cycle times of up to about 72 hours are necessary to saturate a solid polymeric sample of PMMA having 4 mm of thickness at a pressure of 6 MPa and a temperature of 25°C, for instance using nucleating agents [V. Bernardo, J. Martin-de Leon, M.A. Rodriguez-Perez, Production of PMMA-based nanocellular polymers using low demanding saturation conditions. Mater. Lett. (2019) 255, 126551]. In this second case, if the pressure is increased until 30 MPa, the time of cycle may be reduced to 24 h [J. Martin de-Leon, V. Bernardo, & M. A. Rodriguez-Perez, Low Density Nanocellular Polymers Based on PMMA Produced by Gas Dissolution Foaming : Fabrication and Cellular Structure Characterization. Polymers, (2016) 8(265), 1-16]*.*

The cycle time is generally determined by the diffusivity of the foaming agent in the solid polymeric material, that is, the rate at which a given foaming agent is diffused and sorbed within a given polymeric material [M. Tang, T.-B. Du, Y.-P. Chen, Sorption and diffusion of supercritical carbon dioxide in polycarbonate, J. Supercrit. Fluids. 28 (2004) 207-218]. Cycle time depends strongly on the thickness of the solid polymeric material according to the Fick's diffusion laws. Thus a conventional solution to get lower cycle times pass by using nanocellular beads as starting polymeric materials. In such a case, the reduction of the cycle time is achieved by reducing the size of the sample. For instance, the inventors found that, in the same conditions exposed above (i.e., pressure of 30 MPa and temperature of 25°C), the cycle time can be reduced from 24 h (4 mm thickness plate) to 1.5 h (1 mm thickness beads) (unpublished data not encompassed within the scope of the invention). However, the use of beads does not allow manufacturing non-particulate nanocellular polymer materials of high thickness, i.e., foams having a continuous polymer phase having a nanocellular internal structure preferably with a thickness equal to or higher than 2 mm).

Other approaches of improving the efficiency of the gas dissolution process may be, for instance, using a cyclic foaming process so that once the solid polymeric material has been foamed, it is again subjected to a subsequent foaming process to obtain a low-density polymeric material [J. Martin-de Leon, V. Bernardo, M.A. Rodriguez Perez, Cyclic Gas Dissolution Foaming as an Approach for Simultaneously Reducing Cell Size and Relative Density in Nanocellular PMMA, Polymer (Basel). 13 (2021) 2383]. This method is characterized by a first saturation step at 20 MPa and -32°C followed by a first foaming step, thereby producing a first PMMA foamed material. Then, said first foamed material is introduced in the autoclave at 30 MPa and 24°C and foamed again. This process allows decreasing the density of the nanocellular polymer produced. Notwithstanding, the cycle time associated to this process is significantly increased, due to above-described cyclic foaming stages.

Therefore, there is a need for developing new methods based on the gas dissolution technique of producing nanocellular polymer materials that avoid the above-mentioned problems.

The present invention overcomes the drawbacks mentioned above by providing a method of producing nanocellular polymers that allows improving the productivity of the batch foaming or gas dissolution process by significantly reducing the cycle time by around 50% (or even higher in some embodiments of the invention), and, additionally, allows producing tailor-made nanocellular polymer materials with high thickness and optimized cell sizes and, preferably, densities. In addition, the method described in this patent application does not need the use of nucleating agents although they may also be used. Besides, these materials can be produced using a technology that is more environmentally friendly than technologies using organic solvents.

### BRIEF DESCRIPTION OF THE INVENTION

The authors of the present invention have developed an improved method of producing a nanocellular polymer material which is based on a process of ultra-fast saturation by applying a saturation program combining thermal ramps with high pressures.

Therefore, a first aspect of the present invention refers to a method of producing a nanocellular polymer material by gas dissolution foaming, which comprises:
a) a first saturation step of a solid polymeric material with a foaming agent at a pressure of about 35 MPa to about 600 MPa and a first saturation temperature (Tₛₐₜ₁) of about T_{g/m} - 40°C to about T_{g/m} + 40°C;
b) a second saturation step of the polymeric material of step a) with a foaming agent at a pressure of about 35 MPa to about 600 MPa and a second saturation temperature (Tₛₐₜ₂) of about -40°C to about 200°C, with the proviso that said second saturation temperature (Tₛₐₜ₂) is below T_{eff} and below the first saturation temperature (Tₛₐₜ₁) of step a);
c) dropping the pressure of the previous step, wherein the pressure drop speed between the pressure of the previous step and 25 MPa is equal to or higher than about 10 MPa/s, preferably of about 10 MPa/s to about 600 MPa/s;
d) heating the polymeric material of step c) at a temperature (T_{foam}) of about T_{eff} - 20°C to about T_{eff} + 150°C, preferably of about T_{eff} to about T_{eff} + 150°C, thereby a nanocellular polymer material is produced;
e) optionally, adjusting the temperature of the nanocellular polymer material to a temperature of 0 °C to 30 °C, thereby a stabilized nanocellular polymer material is produced;
wherein
- T_{g/m} corresponds to the glass transition temperature (T_{g}) or the melting temperature (Tₘ) of the solid polymeric material, determined by Differential Scanning Calorimetry (DSC) according to ISO13557-1:2018, in nitrogen atmosphere and at a heating rate of 10°C/min; and
- T_{eff} corresponds to the effective glass transition temperature (T_{g,eff}) or the effective melting temperature (T_{m,eff}) of the solid polymeric material once the saturation step b) is deemed to be finished, determined as defined in this document.

The method of the invention allows obtaining nanocellular polymer materials as described herein at short cycle times. Importantly, this goal can be achieved from solid polymeric materials having a thickness or diameter equal or greater than about 1 mm, preferably equal or greater than about 2 mm, more preferably equal to or greater than about 4 mm, even more preferably of about 2 mm to about 6 mm and still more preferably of about 4 mm to about 6 mm. Consequently, different to bead foaming processes, the nanocellular polymer material obtained from the method of the invention does not require to be sintered or moulded to obtain a piece of the desired dimension, but said piece may be directly obtained. Nevertheless, the method of the invention can be used also for reducing production time in the manufacturing of nanocellular polymeric materials in the form of beads, in particular, beads of diameter equal or greater than about 1 mm as defined in this document.

Moreover, the method of producing a nanocellular polymer material described herein does not require the use of second active phases such as nucleating agents, although they may also be used.

The method of producing nanocellular polymers allows improving the productivity of the batch foaming or gas dissolution process by significantly reducing the cycle time by around 50% (or even higher in some embodiments of the invention), and, additionally, allows producing tailor-made nanocellular polymer materials with high thickness and optimized cell sizes and, preferably, densities. In addition, these materials can be produced using a technology that is more environmentally friendly than technologies using organic solvents.

Additional advantages and features of the invention will become apparent from the detailed description that follows and will be particularly pointed out in the appended claims.

### BRIEF DESCRIPTION OF THE DRAWINGS

To complete the description and provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

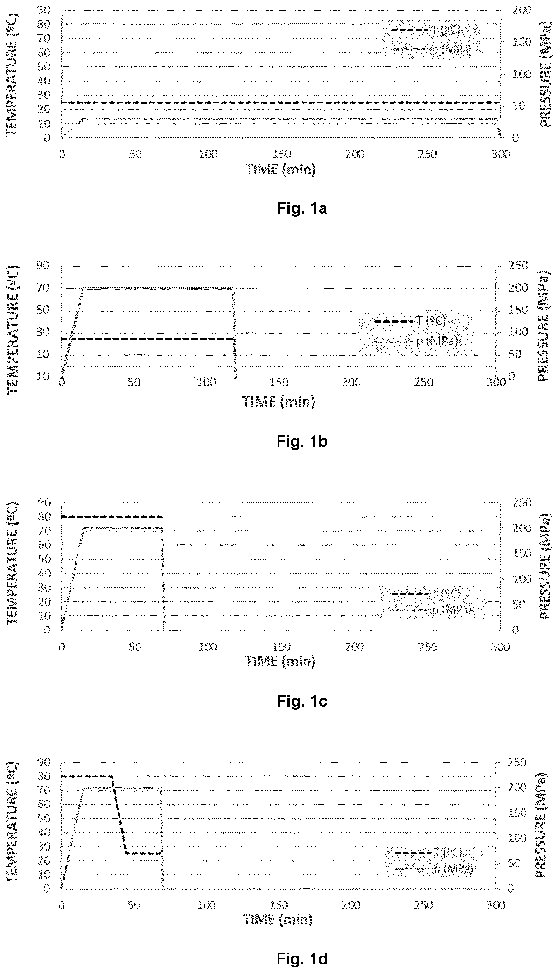

Figure 1 shows the cycle times for the different types of processes of Example 1: (1.1) a comparative process at medium pressure and low temperature (figure 1a), (1.2) a comparative process at high pressure and low temperature (figure 1b), (1.3) a comparative process at high pressures and high temperature (figure 1c), and (1.4) a method according to the invention described herein (figure 1d). For the sake of simplicity, the pressure drop is represented as linear in these figures, although the depressurization rate typically it is faster at the start of the depressurization step than when approaching atmospheric pressure.
Figure 2 shows the amount of gas absorbed in a 2 mm PMMA sample as a function of the cycle time for the different types of processes described in figure 1, following the process conditions of Example 1: (1.1) comparative process at medium pressure and low temperature (circles symbols), (1.2) comparative process at high pressures (triangles symbols), (1.3) comparative process at high pressure and high temperature (rhomb symbols); and (1.4) method according to the invention described herein (square symbols).
Figure 3 shows the amount of the gas absorbed in a 2 mm PMMA sample versus the time in steps a) and b) of a method according to the invention of Example 1.
Figure 4 shows the relative densities of PMMA foams obtained by the different processes described in figure 1, following the process conditions of Example 1: (1.1) comparative process at medium pressure and low temperature, (1.2) comparative process at high pressure and low temperature, (1.3) comparative process at high pressure and high temperature, and (1.4) method according to the invention.
Figure 5 shows the cell sizes of PMMA foams obtained by the different processes described in figure 1, following the process conditions of Example 1: (1.1) comparative process at medium pressure and low temperature, (1.2) comparative process at high pressure and low temperature, (1.3) comparative process at high pressure and high temperature, and (1.4) method according to the invention.
Figure 6 shows the SEM images of the cellular structures of the polymer foams obtained by two processes: (1.3) comparative process at high pressure and high temperature, and (1.4) method according to the invention in Example 1.
Figure 7 shows the relative density (Figure 7a) and the size cell (Figure 7b) of the nanocellular polymer material obtained by the method according to the invention at different temperatures in Example 2.
Figure 8 shows the appearance of the sample thickness (Figure 8a) and SEM image of the cellular structure (Figure 8b) of the nanocellular polymer material obtained by the method according to the invention in Example 3.
Figure 9 shows the SEM images of the cellular structure of the polymer materials obtained by the comparative process (Figure 9a) and the method according to the invention (Figure 9b) in Example 4.
Figure 10 shows the SEM images of the cellular structure of the polymer materials obtained by the comparative process (Figure 10a) and the method according to the invention (Figure 10b) in Example 5.
Figure 11 shows the SEM images of the cellular structure of the polymer materials obtained by the comparative process (Figure 11a) and the method according to the invention (Figure 11b) in Example 6.

### DETAILED DESCRIPTION OF THE INVENTION

Unless defined otherwise, all technical and scientific terms used herein have the same meaning as commonly understood to one of ordinary skill in the art to which this disclosure belongs.

The method of the present invention intends to solve the shortcomings of prior-art methods of producing nanocellular polymers from solid polymeric materials, as it allows producing nanocellular polymer material at significantly low cycle times and also without the need of using second active phase additives. In addition, materials with high thickness and optimized densities and cell sizes can be produced. These materials can be produced using inert gases as foaming agents, which is more environmentally friendly than technologies requiring the use of organic solvents.

It is thus an object of the present invention to provide a method of producing a nanocellular polymer material by gas dissolution foaming.

In particular, the method of the present invention comprises the following steps:
a) a first saturation step of a solid polymeric material with a foaming agent at a pressure of about 35 MPa to about 600 MPa and a first saturation temperature (Tₛₐₜ₁) of about T_{g/m} - 40°C to about T_{g/m} + 40°C;
b) a second saturation step of the polymeric material of step a) with a foaming agent, preferably the same of step a), at a pressure of about 35 MPa to about 600 MPa and a second saturation temperature (Tₛₐₜ₂) of about -40°C to about 200°C, with the proviso that said second saturation temperature (Tₛₐₜ₂) is below T_{eff} and below the first saturation temperature (Tₛₐₜ₁) of step a);
c) dropping the pressure of the previous step, wherein the pressure drop speed between the pressure of previous step and 25 MPa is equal to or higher than about 10 MPa/s, preferably of about 10 MPa/s to about 600 MPa/s;
d) heating the polymeric material of step c) at a temperature (T_{foam}) of about T_{eff} - 20°C to about T_{eff} + 150°C, preferably of about T_{eff} to about T_{eff} + 150°C, thereby a nanocellular polymer material is produced; and
e) optionally, adjusting the temperature of the nanocellular polymer material to a temperature of 0 °C to 30 °C, whereby a stabilized nanocellular polymer material is produced;
wherein
- T_{g/m} corresponds to the glass transition temperature (T_{g}) or the melting temperature (Tₘ) of the solid polymeric material, determined by Differential Scanning Calorimetry (DSC) according to ISO13557-1:2018, in nitrogen atmosphere and at a heating rate of 10°C/min; and
- T_{eff} corresponds to the effective glass transition temperature (T_{g,eff}) or the effective melting temperature (T_{m,eff}) of the solid polymeric material, determined as defined in this document.

In the context of the present invention, the term "nanocellular polymer material" is a polymeric material in a foam form whose internal structure comprises cells or pores of nanometric size (i.e., lower than 1 µm). Besides, in the context of the present invention, the term "solid polymeric material" refers to the polymeric material to be foamed, *i.e.,* it does not have a cellular structure.

The solid polymeric material according to the invention may have any geometric form such as solid plate, sheet, bead (also known as "pellets"), or roll. Thus, in particular embodiments of the invention, the nanocellular polymer material can be a continuous or a non-particulate material, since it can be foamed from a single continue piece of solid polymeric material such a solid plate, a sheet or a roll. Therefore, the continuous nanocellular polymer material obtained from the method of the invention does not require to be sintered or mouldered to obtain a final piece of the desired dimension, but said piece may be directly obtained by foaming a pre-formed piece of solid polymeric material. In some other embodiments, however, the method of the invention can be used also for obtaining a discontinuous nanocelular polymeric material, in particular in form of beads or pellets, which in this case may require to be sintered or mouldered to obtain a final piece of the desired dimension.

The solid polymeric material according to the invention may have any thickness or diameter. In particular embodiments, said thickness or diameter may be equal to or greater than about 1 mm, preferably equal to or greater than about 2 mm, more preferably equal to or greater than about 4 mm, even more preferably of about 2 mm to about 6 mm and still more preferably of about 4 mm to about 6 mm. In particular, the term thickness refers to the lower dimension of non-circular solid polymeric materials such as plates, sheets or rolls, whereas the term diameter refers to the diameter of circular pieces such as beads or pellets.

The continuous solid polymeric material according to the invention may be in any form. In particular, the continuous solid polymeric material used as precursor of the nanocellular material in the method described herein may have a length and/or width greater than its thickness. More specifically, the size ratio between the thickness and any of the length and/or width of said continuous solid polymeric material may be of about 1:5 to about 1:500. In addition, beads or pellets of different thickness or diameter (above 1 mm) can be also used as precursors for the method of the invention. Moreover, rolls of polymeric materials could be also used. In this case, the roll should be configurated in such a way that the gas can enter between the layers of the rolls to impregnate all the polymer. In order to do this, a permeable material to the gas are preferably located in between the layers of the roll. For instance, layers of paper could be used for this purpose. The thickness of the polymer in the roll can also be about 1 mm or higher as described above.

Preferably, the solid polymeric material of the method described herein may be in the form of a solid plate or board, bead or roll. In preferred embodiments, the solid polymeric material according to the invention is in the form of a solid plate or sheet. The method of the invention is able to produce nanocellular polymeric materials from solid polymeric plates or rolls from cm² to m² size and a thickness as described in this document.

The solid polymeric material may comprise an amorphous polymer or a semicrystalline polymer as a primary component. Thus, this amorphous or semicrystalline polymer (also referred to as "primary polymer", "main polymer" or "basic polymer" in this document) is the component of the solid polymeric material which is present in a higher weight amount. In preferred embodiments, the solid polymeric material comprises at least 50 % by weight of said amorphous or semicrystalline polymer. More preferably, the solid polymeric material may consist of or essentially may consist of the primary polymer as described in this document.

The solid polymeric material may also comprise a combination of amorphous polymers, a combination of semicrystalline polymers, or a combination comprising at least one amorphous polymer and at least one semicrystalline polymer. The solid polymeric material according to these embodiments may comprise at least 50 % by weight of said combination of amorphous and/or semicrystalline polymers.

In the method of the invention, the amorphous polymer may be selected from the group consisting of polymethylmethacrylate (PMMA), polystyrene (PS), polyetherimide (PEI), polycarbonate (PC), polyvinyl chloride (PVC), polysulfone (PSU), thermoplastic starch (TPS), natural rubber (NR) and combinations thereof.

Additionally or alternatively, the semicrystalline polymer may be selected from the group consisting of low-density polyethylene (LDPE), high-density polyethylene (HPDE), ethylene vinyl acetate (EVA) and polypropylene (PP), polyamide (PA), polyethylene terephthalate (PET), polylactic acid (PLA), polybutylene adipate terephthalate (PBAT), polybutylene succinate (PBS), polyhyroxyalkanoate (PHA), thermoplastic elastomers such as thermoplastic polyurethane (TPU), thermoplastic polyolefin (TPO) and thermoplastic polyester polyamide (PEBA), and a combination thereof.

The primary polymer comprised as the solid polymeric material described herein is preferably selected from polymethylmethacrylate (PMMA) and polystyrene (PS), more preferably polymethylmethacrylate (PMMA).

The solid polymeric material may further comprise other compounds in minor percentage. In particular, it may further comprise at least one nucleating agent. The nucleating agent need to be of nanometric size and may be selected from the group consisting of:
- Nanoparticles such as nanosilica, nanoclays, nanometric sepiolites or nanofibers;
- A second polymer different from the primary polymer or the combination of primary polymers as defined above (i.e., the primary component(s) of the solid polymeric material) such as acrylic block copolymers, styrenic block copolymers or thermoplastic elastomers; and
- a combination thereof.

A nucleating agent according to the invention improves the nucleation rate (number of cells per cm³) of the polymeric material and consequently decrease the cell size within the said polymeric material. Inorganic nucleating agents may be present in an amount lower than 5 wt.%, in particular lower than 3 wt.%, more particularly lower than 1 wt%, with respect to the total weight of the solid polymer material. On the other side, organic nucleating agents may be present in an amount lower than 10 wt.%, in particular lower than 5 wt.%, and more particularly lower than 3 wt%, with respect to the total weight of the solid polymer material.

In some preferred embodiments, the nucleating agent is a styrenic block copolymer.

The solid polymeric material may comprise at least one additive to improve the properties of the nanocellular polymer material obtained by the method described herein. This additive may be an infrared radiation blocker, that reduces the thermal conductivity and improves its capacity as a thermal insulator, a flame retardant, a reinforcing additive, a pigment or a combination thereof. More specifically, the polymeric material may comprise an infrared radiation blocker in an amount lower than 10 wt.%, in particular lower than 5 wt%; a pigment in an amount lower than 3 wt%; a flame retardant in an amount lower than 20 wt.%; and/or a reinforcing additive in an amount lower than 20 wt%, with the proviso that the total amount of the sum of these additives is equal to or lower than 40 wt.%. All these amounts expressed by weight in respect to the total weight of the solid polymer material.

Nonlimiting examples of infrared radiation blocker may be graphite, graphene, silicon carbide, carbon nanotubes, titanium oxide, and a combination thereof.

Nonlimiting examples of flame retardant may be metal hydroxides, halogen compounds, intumescent compounds or non-halogen compounds.

Nonlimiting examples of reinforcing additive may be fibers, talc, calcium carbonate, mica, nanoclays or nanosilica.

The foaming agent used can be selected such that, based on its affinity with the polymeric material, a suitable balance between solubility and diffusivity is achieved. Particularly, the foaming agent can be a volatile organic compound such as, for example, acetone or alcohols. In addition, the foaming agent used in the method of the present invention may be an inert gas such as, for example, nitrogen, carbon dioxide, helium or argon; or it can be another type of gas such as, for example, a hydrocarbon such as isobutane, n-butane, cyclopentane, n-pentane, isopentane, cyclohexane; or other gases such as hydrogen, hydrofluoroolefins or hydrofluorocarbons.

In particular embodiments, the foaming agent may be selected from the group consisting of carbon dioxide, nitrogen, argon, isobutane, n-butane, other hydrocarbons, chlorofluorocarbons (CFCs), hydroclorofluorocarbons (HCFCs), hydrofluorocarbons (HFCs), dimethyl eter (DME), methyl formate (MF), ethanol, hydrofluoroolefins (HFO) and combinations thereof. In preferred embodiments, the foaming agent may be selected from nitrogen, argon, carbon dioxide and combinations thereof. In more preferred embodiments, the foaming agent is carbon dioxide. Preferably, the foaming agent used in the two or more saturation steps of the method of producing a nanocellular material according to the invention is the same.

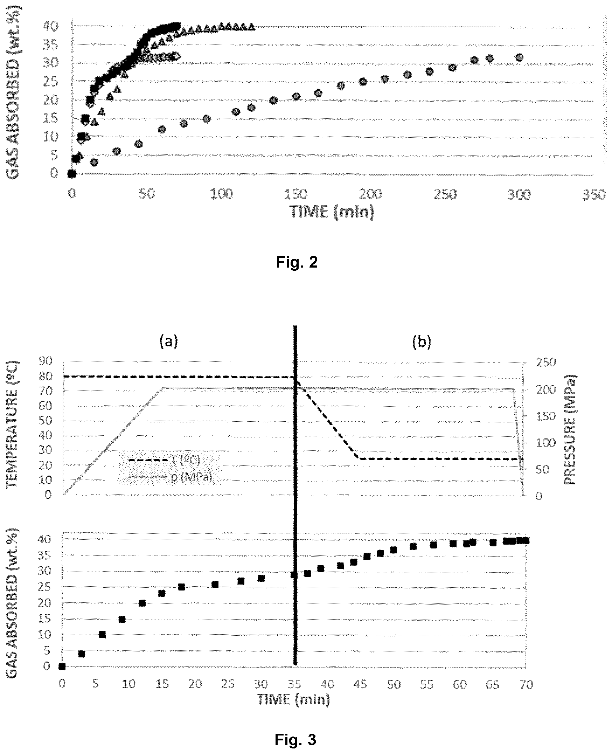

Typically, the gas dissolution foaming processes conventionally used comprise treating the solid polymeric material (for instance, in the form of a solid plate) at a given pressure and temperature, for instance, as those shown in figure 1a. As previously mentioned, cycle times of these processes are typically long. For instance, the cycle time needed for a 2 mm PMMA sample using typical conditions of 25°C and 30 MPa and CO₂ is of 5 hours (see the comparative process (1.1) in Example 1 and figure 1a below). In these conditions, the amount of CO₂ gas absorbed is of 32 wt.% with respect to the weight of the saturated PMMA piece (see figure 2).

With the aim to reduce the cycle time (i.e., the period of time from the start of the autoclave pressurization until the saturation is deemed to be finished), one option could be to increase the pressure of the system, thus increasing diffusivity of the foaming agent to the solid polymeric material to be foamed. For instance, the cycle time can be reduced from 5 hours to 2 hours by increasing the pressure from 30 MPa to 200 MPa (see the comparative process (1.2) in Example 1 and figure 1b below). Besides, the solubility of the foaming agent (i.e., the amount of foaming agent adsorbed) in the polymeric material can also be increased. In the particular case provided in Example 1, the amount of CO₂ gas absorbed is increased to 40 wt.% with respect to the weight of the saturated PMMA piece by increasing the pressure from 30 MPa to 200 MPa (see figure 2). Although this method (not part of the invention) could be used to produce nanocellular polymeric materials, there is still a need for reducing even more the cycle time and, consequently, the time required to produce nanocellular polymeric materials.

Another possibility to reduce the cycle time is to increase the temperature of the system, since diffusivity of the foaming agent can also be increased in this way. For instance, the saturation time can be reduced up to 70 min by increasing the temperature to 80°C (see the comparative process (1.3) in Example 1 and figure 1c below). Notwithstanding, this process at a higher pressure and higher temperature (not part of the invention) has several important drawbacks. First, it has been found that the subsequent depressurization of the system may lead to an undesired expansion of the saturated polymeric material within the autoclave resulting in a reduction of the usable space thereof and, additionally, a further limitation in the size of the piece of solid polymeric material to be foamed. Second and more importantly, the solubility of a foaming agent such as CO₂ is typically reduced by increasing the temperature. For instance, the amount of CO₂ absorbed according to this approach in the comparative processes of Example 1 was similar to those of the comparative process (1.1) (see figure 2). Thus, even though a huge reduction in the cycle time can be achieved following this approach, it is not suitable for producing nanocellular polymeric materials.

Surprisingly, the inventors found that the combination of a first saturation step at a high pressure and high temperature as described herein (also referred to as "pre-plastification step" and/or step a) in this document) with at least a second saturation step at high pressure, but a low temperature as also described herein, the cycle time and, consequently, the total time of the method can be significantly reduced. At the same time, the method of the invention is able to avoid that the foam be expanded within the autoclave and, even more importantly, the amount of foaming agent absorbed at the polymeric material is high enough to obtain a nanocellular polymeric materials and, in particular embodiments of the invention, low-density nanocellular polymeric materials as described herein. For instance, in the particular process conditions of Example 1, the method according to the invention allows the absorption of 40 wt.% of CO₂ with respect to the weight of the saturated polymeric material in a reduced cycle time (sum of steps a) and b), including the pressurization at a rate of 100 MPa/min and the cooling from 80°C to 25°C at a cooling rate of 10°C/min) of 70 minutes.

The method of the present invention comprises a first saturation step (a) wherein a solid polymeric material is treated with a foaming agent at a pressure of about 35 MPa to about 600 MPa and a first saturation temperature (Tₛₐₜ₁) of about T_{g/m} - 40°C to about T_{g/m} + 40°C, wherein T_{g/m} is the glass transition temperature (T_{g}) or the melting temperature (Tₘ) of the solid polymeric material.

In some preferred embodiments, the method described herein comprises a first saturation step a) which is carried out at a first saturation temperature as described in this document and a pressure in the range of about 50 MPa to about 400 MPa, more preferably of about 100 MPa to about 200 MPa. A saturation pressure lower than 50 MPa may result in an only moderate pre-plastification effect and reduction of the cycle time. Besides, the pressure drop in those embodiments is lower, which may negatively affect the achievement of very small cells and/or lower densities. On the other hand, saturation pressures higher than 400 MPa implies using more expensive autoclaves and compressors. Moreover, the higher the pressure, the higher the energy consumption for compression and wear of the system (i.e., autoclave, compressor, high pressure pipes, etc) where the process is carried out. The more preferred saturation range is, therefore, of about 100 MPa to about 200 MPa.

In those embodiments wherein the solid polymeric material consist of or essentially consist of an amorphous polymer, T_{g/m} typically corresponds to the glass transition temperature (T_{g}) of said polymer. Likewise, in those embodiments wherein the solid polymeric material consist of or essentially consist of a semicrystalline polymer, T_{g/m} typically corresponds to the melting temperature (Tₘ) of said polymer. In some other embodiments wherein the solid polymeric material comprises nucleating agents and/or other additive(s), as well in those embodiments wherein the primary component is a combination of different polymers, the T_{g} or Tₘ of the solid polymeric material may not correspond with that of the pure polymer. However, for all these embodiments, this parameter can be easily determined by Differential Scanning Calorimetry (DSC) according to ISO 11357-1:2018, using a nitrogen atmosphere and a heating rate of 10°C/min. Therefore, a skilled person can directly establish the range of the first saturation temperature for any given polymeric materials.

For instance, if the solid polymeric material to be foamed is made of PMMA, a skilled person immediately recognizes that the glass transition temperature (measured by DSC according to ISO 11357-1:2018, using a nitrogen atmosphere and a heating rate of 10°C/min) is about 112°C. Therefore, the first saturation temperature (Tₛₐₜ₁) according to these embodiments may range from about 72 °C to about 152°C. Alternatively, if the solid polymeric material to be foamed is made of PS, the glass transition temperature (measured by Differential Scanning Calorimetry (DSC) according to ISO 11357-1:2018, using a nitrogen atmosphere and a heating rate of 10°C/min) is about 100°C. Therefore, the first saturation temperature (Tₛₐₜ₁) according to these embodiments may range from about 60°C to about 140°C.

On the other hand, if the solid polymeric material to be foamed comprises a mixture of different amorphous and/or semicrystalline polymers as primary component, the first saturation temperature (Tₛₐₜ₁) may be established based on the T_{g} or Tₘ of the polymer which is present in a higher amount. Thus, for example, if a solid polymeric material to be foamed comprises 70 wt.% of PMMA and 30 wt.% of PS, the first saturation time (Tₛₐₜ₁) is of about T_{g/m} - 40°C to about T_{g/m} + 40°C, wherein T_{g/m} is the glass transition temperature (T_{g}) corresponding to PMMA in the solid polymeric material, determined by Differential Scanning Calorimetry (DSC) according to ISO13557-1:2018, in nitrogen atmosphere and at a heating rate of 10°C/min.

Thus, according to the method of the invention, the solid polymeric material to be foamed can be introduced within an autoclave configured to work at the desired pressure and temperature within the ranges specified in this document. In some embodiments, said autoclave already is at the first saturation temperature (Tₛₐₜ₁) when the solid polymeric piece of material to be foamed is introduced within it. Subsequently, the pressure of the system may be adjusted up to the established value within the range of about 35 MPa to about 600 MPa, preferably of about 50 MPa to about 400 MPa, more preferably of about 100 MPa to about 200 MPa. The pressurization rate of the autoclave may be of about 10 MPa/min to about 200 MPa/min, being preferably that said rate will be as high as possible in order to keep the cycle time and, consequently, the total time of the method of the invention, as short as possible.

Once the established pressure value is achieved, both the temperature and the pressure of the system are maintained within the established range until the pre-plastification step is deemed to be finished. Typically, the step a) is deemed to be finished when the polymeric material is fully saturated, that is, it has achieved the maximum amount of foaming agent that it can absorb at the given pressure and temperature. This time can be calculated using diffusivity data for polymers and foaming agents available in the literature, or conducting a saturation analysis using experiments in which the solubility is measured as a function of time [Guo, H., & Kumar, V. (2015). Some thermodynamic and kinetic low-temperature properties of the PC-CO2 system and morphological characteristics of solid-state PC nanofoams produced with liquid CO2. Polymer, 56, 46-56]*.* In particular embodiments where the solid polymeric material to be foamed is a PMMA piece of about 1 mm to about 6 mm thickness and the foaming agent is CO₂, the time of this first saturation step may be of about 5 min to about 2 hours, more specifically of about 5 minutes to about 1 hour, and even more specifically of about 5 minutes to about 30 minutes.

In some preferred embodiments, the solid polymeric material comprises polymethylmethacrylate (PMMA) as a primary polymer and is subjected to a first saturation step a) with a foaming agent, preferably CO₂, N₂ or Ar, at a pressure in a range of about 35 MPa to about 600 MPa, preferably of about 50 MPa to about 400 MPa, more preferably of about 100 MPa to about 200 MPa, and a first saturation temperature (Tₛₐₜ₁) of about 72°C to about 152°C. In more preferred embodiments, the first saturation temperature (Tₛₐₜ₁) is of about 70°C to about 140°C, more preferably of about 75°C to 110°C. In particular, in those embodiments wherein the foaming agent is CO₂, the first saturation temperature (Tₛₐₜ₁) more preferably is of about 75°C to about 95°C, and yet more preferably of about 80°C to about 90°C.

In some other preferred embodiments, the solid polymeric material comprises polystyrene (PS) as primary polymer and is subjected to a first saturation step a) with a foaming agent, preferably CO₂, N₂ or Ar, at a pressure in a range of about 35 MPa to about 600 MPa, preferably of about 50 MPa to about 400 MPa, more preferably of about 100 MPa to about 200 MPa, and a first saturation temperature (Tₛₐₜ₁) of about 60°C to about 140°C. In more preferred embodiments, the first saturation temperature (Tₛₐₜ₁) is of about 70°C to about 130°C. More specifically, in those embodiments wherein the foaming agent is Ar, the first saturation temperature (Tₛₐₜ₁) more preferably is of about 70°C to about 110°C, and yet more preferably of about 80°C to about 120°C.

During this first step, the saturation occurs in a short interval of time due to the high diffusivity of the foaming agent within the solid polymeric material. Notwithstanding, the amount of absorbed foaming agent is relatively low due to the high temperature established in this first saturation step a). Surprisingly, without being bound to any theory, the inventors believe that a pre-plastification of the solid polymeric material occurs in this first step due to the combined effect of the high temperature as defined in this document and the saturation with the foaming agent within the solid polymeric material at such high pressure of about 35 MPa to about 600 MPa, preferably of about 50 MPa to about 400 MPa, more preferably of about 100 MPa to about 200 MPa. They also believe that this pre-plastification of the solid polymeric material plays an important role to obtain the subsequent ultra-fast saturation in the method according to the invention.

The method described herein further comprises a second saturation step b), also referred to as ultra-fast saturation step in this document, which is carried out under pressure at the same pressure range of step a) and further decreasing the temperature to a second saturation temperature (Tₛₐₜ₂) of about -40°C to about 200°C, with the proviso that said second saturation temperature (Tₛₐₜ₂) is below T_{eff} and below the first saturation temperature (Tₛₐₜ₁) of step a), wherein T_{eff} corresponds to the effective glass transition temperature (T_{g,eff}) or the effective melting temperature (T_{m,eff}) of the polymeric material once the saturation step b) is deemed to be finished.

The effective glass transition temperature (T_{g,eff}) is defined as the glass transition temperature of a polymeric material comprising an amorphous polymer as primary component after having absorbed the foaming agent, whereas the effective melting transition temperature (T_{m,eff}) is defined as the melting temperature of the polymeric material comprising a semicrystalline polymer as primary component after having absorbed the foaming agent. Typically, said T_{eff} is lower than the corresponding T_{g} or Tₘ of the polymeric material due to the plasticizing effect of the foaming agent on the polymer. This parameter can easily be determined by applying some theoretical models, such as that of Chow; or preferably by determining experimentally the minimum temperature at which the sample can be foamed (Guo, H., & Kumar, V. (2015). Some thermodynamic and kinetic low-temperature properties of the PC-CO2 system and morphological characteristics of solid-state PC nanofoams produced with liquid CO2. Polymer, 56, 46-56*).* This experimental approach comprises extracting samples of the saturated polymer at given conditions from the autoclave and increasing its temperature by introducing said samples in an oven or a thermal bath. This experiment is typically performed at different temperatures, lower than the Tg or Tm of the solid polymeric material. The T_{eff} is established as the lower temperature in which foaming (increase of volume or reduction of the density) is detected.

The effective glass transition temperature for polymeric materials based on PMMA and CO₂ as a foaming agent may be in the range of 0 to 110°C as a function of the pressure and temperature used in the saturation step. Higher pressures and lower saturation temperatures may reduce the effective glass transition temperature. For the system PMMA using N₂ as foaming agent, the effective glass transition temperature may be in the range 35°C to 110°C. And, for the system PMMA using argon as foaming agent, the effective glass transition temperature may be in the range 30°C to 110°C.

On the other hand, the effective glass transition temperature for polymeric materials based on PS and CO₂ as foaming agent may be in the range of 40 to 120°C as a function of the pressure and temperature used in the saturation step. For the system PS using N₂ as foaming agent, the effective glass transition temperature may be in the range 55°C to 120°C. And, for the system PS using as argon as foaming agent, the effective glass transition temperature may be in the range 50°C to 120°C.

Thus, according to the method of producing a nanocellular polymer material of the invention, the second saturation step may be carried out by reducing the temperature of the autoclave from the first saturation temperature (Tₛₐₜ₁) to the second saturation temperature (Tₛₐₜ₂), while keeping the range of the pressure comprised between 35 MPa to 600 MPa, preferably of about 50 MPa to about 400 MPa, more preferably of about 100 MPa to about 200 MPa. This cooling process may be done at any rate, although it is preferred that said process will be carried out as fast as possible, in particular at a cooling rate of about 0.5 °C/min to about 10 °C/min, in order to keep the cycle time as short as possible. Once the established temperature value (Tₛₐₜ₂) is achieved, both the temperature and the pressure of the system are maintained until the ultra-fast saturation step is deemed to be finished. This step can be deemed to be finished when the polymeric material has absorbed all the foaming agent that it can absorb at the conditions of this new step b). This saturation time can be routinely determined performing a solubility study by analyzing the evolution of the amount of blowing agent inside a sample of the polymeric material along time [Guo, H., & Kumar, V. (2015). Some thermodynamic and kinetic low-temperature properties of the PC-CO2 system and morphological characteristics of solid-state PC nanofoams produced with liquid CO2. Polymer, 56, 46-56]*.*

In some particular embodiments wherein the solid polymeric material to be foamed is a PMMA piece of about 1 to about 6 mm thickness and the foaming agent is CO₂, the time of this second saturation step may be of about 5 minutes to about 3 hour, more specifically of about 15 minutes to about 3 hour, even more specifically of about 15 minutes to about 90 minutes, and yet more specifically of about 15 minutes to about 60 minutes. Consequently, this second step b) is also referred to as ultra-fast saturation step in the context of the present invention.

In some preferred embodiments, in particular when the primary polymer of the solid polymeric material is PMMA and the foaming agent is CO₂, the second saturation step b) of the method described herein is carried out at a second saturation temperature of about -40 °C to about 100°C, more preferably of about -40°C to about 50°C and even more preferably of about -40°C to about 25°C or about 0°C to about 40°C.

In some other preferred embodiments, in particular when the primary polymer of the solid polymeric material is PMMA or PS and the foaming agent is Ar or N₂, the second saturation step b) of the method described herein is carried out at a second saturation temperature of about -40 °C to about 100°C, more preferably of about -40°C to about 50°C and even more preferably of about -40C to about 25°C.

The pressure of this second saturation step b) can be the same as that established for the pre-plastification step (step a)) or not. Thus, this pressure may range of about 35 MPa to about 600 MPa, preferably of about 50 MPa to about 400 MPa, and more preferably about 100 to about 200 MPa. Those ranges are preferred for similar reasons as those exposed above regarding the first saturation step a).

It has been surprisingly found that once the first saturation level is achieved in the step a) of the method according to the invention, the second saturation step b) takes place much more quickly than expected. Indeed, the decrease of the temperature in the second step b) of the method described herein allows to reach the desired solubility of the foaming agent in the polymeric material, this way increasing the amount of gas absorbed in the said polymeric material, in a significantly reduced cycle time.

In the method of producing a nanocellular polymer material as described herein the amount of gas absorbed, preferably CO₂, by a given polymeric sample of PMMA may be of about 25 wt.% to about 45 wt.%, in particular, the amount of gas absorbed may be of about 30 wt.% to about 40 wt.%, more in particular is about 40 wt.%, amounts expressed by weight with respect to the weight of the saturated polymeric material. The amount of gas absorbed by a given solid polymeric sample can be determined by techniques known by the skilled person. For example, the amount of gas absorbed can be determined by estimating the weight of the solid polymeric material at the end of the second saturation step b) and comparing it with the weight of the starting solid polymeric material. Other in-situ methods, like the use of a magnetic suspension balance, allow measuring the amount of gas absorbed as a function of time at given conditions.

As previously mentioned herein, it has been surprisingly found that a method according to the invention is faster, i.e. may take places at short cycle times of only about 70 minutes for a solid PMMA material of 2 mm of thickness that may, in turn, absorb about 40 wt.% of CO₂ (see Example 1, as well as figures 1d and 2). These values of absorbed gas are higher than those obtained by conventional methods carried out at medium pressure and low temperature which imply much longer cycle times and, although they are comparable to those obtained by the comparative process (1.2); thus, the method of the invention is significantly faster than said process (see Example 1, as well as figures 1a and 2).

In addition to saturation steps a) and b), the method of producing a nanocellular polymer material of the invention may comprise a third or further saturation steps of the polymeric material obtained in previous saturation step with a foaming agent at a pressure of 35 MPa to about 600 MPa, preferably of about 50 MPa to about 400 MPa, more preferably of about 100 MPa to about 200 MPa, and a third or further saturation temperature of about -40°C to about 200°C, with the proviso that said saturation temperature is below T_{eff}' and below the first saturation temperature (Tₛₐₜ₁) of step a), wherein T_{eff}' corresponds to the effective glass transition temperature (T_{g,eff}) or the effective melting temperature (T_{m, eff}) of the polymeric material once said third or further saturation step is deemed to be finished, and T_{eff}' is determined as defined in this document in relation with T_{eff}.

The third or further saturation steps may provide the following advantages to the method of the invention: a better control of the nanocellular structure can be achieved, energy savings of the compression and less wear of the high pressure autoclave parts, without significantly increasing the cycle time. Thus, for instance, the method of the invention may comprise a second saturation step at a given pressure and a third saturation step at a higher pressure (within the established range). In this way, a nanocellular structure with a reduced cell size can be obtained, while the energy cost, the mechanical fatigue and the wear to the system can be reduced.

The method described herein further comprises a depressurization step c) comprising dropping the pressure of the autoclave, once the saturation phase is deemed finished. In order to achieve a suitable nucleation rate and, therefore, create a nanocellular structure, it is important that the depressurization rate at the beginning of this pressure drop, in particular from the pressure of the last saturation step and at least until the system reaches a pressure of about 25 MPa, takes places at a speed equal to or higher than about 10 MPa/s, preferably of about 10 MPa/s to about 600 MPa/s, preferably of about 30 MPa/s to about 600 MPa/s, more preferably of about 100 MPa/s to about 300 MPa/s, even more preferably of about 100 MPa/s to about 200 MPa/s, yet more preferably of about 150 MPa/s to about 200 MPa/s. The pressure drop rate specified here is measured between the pressure at the end of the last saturation step (i.e., step b) or, if the method of the invention comprises a third or further saturation step, to the latest of those) and the time the pressure reaches a value of 25 MPa. In the method of the invention, the depressurization speed does not follow a linear pattern, as when some foaming agents change in gas phase at the end of the depressurization, which occurs in general below 25 MPa, the pressure dropping speed is lower. As a mode of example, if the pressure at the end of step b) is 200 MPa and a pressure of 25 MPa is reached in 1 second, the pressure drops rate would be 175 MPa/s.

Releasing the pressure of the system at the low temperatures defined herein for step b) of the method according to the invention, the expansion of the saturated polymeric material within the autoclave is unsignificant or very limited. This limited expansion of the saturated polymeric material allows producing a greater volume of nanocellular polymeric material per cycle. The same applies in those embodiments wherein the method comprises a third or further saturation step.

The method described herein further comprises a step d) of foaming (also referred to as "expansion step" in this document), which is carried out once the solid polymeric material has been saturated with the foaming agent, the autoclave wherein the saturation was performed has been depressurized and, preferably, the polymeric material obtained has been discharged from said autoclave. In said step d) the polymeric material obtained after step c) is heated a temperature (T_{foam}) of about T_{eff} - 20°C to about T_{eff} + 150°C, preferably of about T_{eff} to about T_{eff} + 150°C, thereby producing a nanocellular polymer material, wherein T_{eff} is determined as described in this document. In those embodiments of the invention wherein the method comprises a third or further saturation step, T_{eff} in step d) corresponds to the effective glass transition temperature (T_{g,eff}) or the effective melting temperature (T_{m,eff}) of the polymeric material once the latest saturation step is deemed to be finished, determined as defined in this document

Heating may be performed by any method known in the art such as a thermostatic bath, convection oven, infrared oven, air circulation oven, autoclave or any other heating system. For instance, the expansion of step d) may be performed by transferring the polymeric material which has been subjected to the first, second and, optionally, third or further saturation steps to a thermostatic bath at a temperature within the specified range. In particular embodiments wherein the foaming temperature (T_{foam}) is equal to or lower than 100°C, step d) may comprise immersing the polymeric material obtained after step c) in water at the established foaming temperature.

In step d) of the method described herein, the final expansion of the polymeric material takes place giving rise to the nanocellular polymer material. This process mainly depends on the amount of gas absorbed in the polymeric material at the beginning of the said foaming step d). Although some degree of expansion may be produced during the depressurization and/or the desorption time (i.e., the period of time between said depressurization and the foaming step d)), a complete expansion is only achieved in step d) of the method described herein. This is important for several reasons: first, to assure the optimization of the space available within the autoclave; and second, to control the foaming step so that different density levels from the same polymeric material of step c) can be achieved by varying the conditions of this foaming step d).

In some preferred embodiments, the time between the depressurization step c) and the expansion step d), also referred to as desorption time herein, may be equal to or lower than 60 minutes, preferably equal to or lower than 30 min, and more preferably equal to or lower than 15 min. A higher desorption time may also be possible, for instance, if the saturated polymeric material obtained in step c) are kept in a freezer or the like. In more preferred embodiments, the desorption time may be of about 1 min to about 20 min, more preferably of about 2 min to about 15 min, and even more preferably of about 5 min to about 10 min.

The expansion step may be deemed to be finished when the sample is observed to achieve its maximum expansion. After this maximum level is achieved, the sample might remain the same or, if the expansion temperature is too high, it can collapse resulting in an undesired density increase. To determine at which time the maximum expansion takes place, a minor amount of routine trials at different foaming times can be carried out, for instance, 0,5, 1, 2, 3 and 5 minutes. For instance, the density of samples of the material at different foaming times can be determined according to the standard UNE-EN-ISO 1183-1:2009. The expansion step may be considered finished when the minimum density value is obtained.

In some particular embodiments wherein the polymeric material to be foamed is a PMMA piece of about 1 mm to about 6 mm thickness and the foaming agent is CO₂, step d) may be carried out by immersing the PMMA piece in a bath of boiling water at 100°C for less than about 10 minutes, preferably less than about 5 minutes, and more preferably of less than about 2 minutes.

In preferred embodiments, the method described herein may further comprise an additional step e) of stabilization, wherein the temperature of the nanocellular polymer material obtained in step d) is adjusted to a temperature of about 0 °C to about 30 °C, whereby a stabilized nanocellular polymer material is produced.

This stabilization step e) may occur of about 1 min to about 10 min until the nanocellular polymer material reach the temperature of about 0°C to about 30°C. A person skilled in the art knows that the time required until the nanocellular polymer material reach that temperature depends on the thermal diffusivity of the said nanocellular polymer material and its thickness.

Indeed, all the times described above for the different steps of the method according to the invention apply to solid polymeric material having a thickness of about 1 mm to 6 mm. As a skilled person would understand, those times may depend on the thickness of the solid polymeric material. Indeed, the lower the thickness of the solid polymeric material, the shorter the duration of the saturation and foaming steps of the method described herein.

In preferred embodiments, the invention refers to a method as described herein wherein the solid polymeric material comprises polymethylmethacrylate (PMMA) as primary polymer, preferably at least 50 % by weight of PPMA with respect to the total weight of the solid polymeric material, and the method comprises:
a) a first saturation step of the solid polymeric material with a foaming agent which is carbon dioxide, argon or nitrogen, at a pressure of about 35 MPa to about 600 MPa, preferably of about 50 MPa to 40 MPa, more preferably of about 100 MPa to 200 MPa; and a first saturation temperature (Tₛₐₜ₁) of about 72°C to about 152°C, preferably of about 70 °C to about 140 °C, more preferably of about 75 °C to about 110 °C; when the foaming agent is carbon dioxide, the first saturation temperature is more preferably of about 75°C to about 95 °C, yet more preferably of about 80°C to about 90°C;
b) a second saturation step of the polymeric material of step a) with a foaming agent which is carbon dioxide, argon or nitrogen, preferably the same of step a), at a pressure of about 35 MPa to about 600 MPa, preferably of about 50 MPa to 40 MPa, more preferably of about 100 MPa to 200 MPa; and a second saturation temperature (Tₛₐₜ₂) of about -40 °C to about 100 °C, with the proviso that said second saturation temperature (Tₛₐₜ₂) is below T_{eff} and below the first saturation temperature (Tₛₐₜ₁) of step a);
c) dropping the pressure of step b), wherein the pressure drop speed between the pressure of step b) and 25 MPa is equal to or higher than about 10 MPa/s, preferably of about 10 MPa/s to about 600 MPa/s, more preferably of about 100 MPa/s to about 300 MPa/s;
d) heating the polymeric material of step c) at a temperature (T_{foam}) of about 80 °C to about 120 °C, preferably of about 100°C when the foaming agent is CO₂, thereby a nanocellular polymer material is produced; and
e) optionally, adjusting the temperature of the nanocellular polymer material to a temperature of 0 °C to 30 °C, whereby a stabilized nanocellular polymer material is produced;
wherein T_{eff} corresponds to the effective glass transition temperature (T_{g,eff}) or the effective melting temperature (T_{m,eff}) of the polymeric material once the saturation step b) is deemed to be finished, determined as defined in this document.

In more preferred embodiments, the invention refers to a method as described herein, wherein the solid polymeric material comprises PMMA, preferably in an amount of at least 50 % by weight with respect to the total weight of the solid polymeric material, and has a thickness of about 1 mm to about 6 mm, and wherein the method complies with one or more of the following:
- the step a) is carried out for about 5 minutes to about 2 hours; preferably for about 5 minutes to about 1 hour; more preferably for about 5 minutes to about 30 minutes;
- the step b) is carried out for about 3 minutes to about 1 hour; preferably for less than about 30 min; more preferably for less than about 15 minutes; and/or
- the step d) is carried out for less than 10 min, preferably less than 5 minutes; and more preferably less than 2 minutes.

In other preferred embodiments, the invention refers to a method as described herein wherein the solid polymeric material comprises polystyrene (PS) as primary polymer, preferably at least 50 % by weight of PS with respect to the total weight of the solid polymeric material, and the method comprises:
a) a first saturation step of the solid polymeric material with a foaming agent which is argon, at a pressure of about 35 MPa to about 600 MPa, preferably of about 50 MPa to 400 MPa, more preferably of about 100 MPa to 200 MPa; and a first saturation temperature (Tₛₐₜ₁) of about 60 °C to about 140°C, preferably of about 70 °C to about 130 °C, more preferably of about 80 °C to about 120 °C;
b) a second saturation step of the polymeric material of step a) with a foaming agent with is argon, at a pressure of about 35 MPa to about 600 MPa, preferably of about 50 MPa to 400 MPa, more preferably of about 100 MPa to 200 MPa; and a second saturation temperature (Tₛₐₜ₂) of about 70 °C to about 120 °C, with the proviso that said second saturation temperature (Tₛₐₜ₂) is below T_{eff} and below the first saturation temperature (Tₛₐₜ₁) of step a);
c) dropping the pressure of step b), wherein the pressure drop speed between the pressure of step b) and 25 MPa is equal to or higher than about 10 MPa/s, preferably of about 10 MPa/s to about 600 MPa/s, more preferably of about 100 MPa/s to about 300 MPa/s;
d) heating the polymeric material of step c) at a temperature (T_{foam}) of about 100 °C to about 140 °C, preferably of about 110 °C to about 130°C, thereby a nanocellular polymer material is produced; and
e) optionally, adjusting the temperature of the nanocellular polymer material to a temperature of 0 °C to 30 °C, whereby a stabilized nanocellular polymer material is produced;
wherein T_{eff} corresponds to the effective glass transition temperature (T_{g,eff}) or the effective melting temperature (T_{m,eff}) of the polymeric material once the saturation step b) is deemed to be finished, determined as defined in this document.

In more preferred embodiments, the invention refers to a method as described herein, wherein the solid polymeric material comprises PS, preferably in an amount of at least 50 % by weight with respect to the total weight of the solid polymeric material, and has a thickness of about 1 mm to about 6 mm, and wherein the method complies with one or more of the following:
- the step a) is carried out for about 20 minutes to about 8 hours; preferably for about 10 to about 4 hours; more preferably for about 10 to about 3 hours
- the step b) is carried out for about 15 minutes to about 3 hours; preferably for about 15 minutes to about 90 minutes; more preferably for about 15 minutes to about 60 minutes; and/or
- the step d) is carried out for less than 10 minutes preferably less than 5 minutes; and more preferably less than 2 minutes.

It is also provided a nanocellular polymer material obtained or obtainable by the method of the invention. Typically, the nanocellular polymer material comprises the same composition as described above for the solid polymeric material.

Moreover, this nanocellular polymer material has improved characteristics transferred by the method described herein as it has:
- a density of about 50 Kg/m³ to 900 kg/m³, more preferable from 100 to 600 kg/m³.
- a relative density defined as the ratio between the density of the nanocellular material polymer and the corresponding solid polymeric material of about 0.04 to 0.80; more preferable from 0.1 to 0.6.
- a cell size of about 10 nm to about 1 µm; more preferable from 10 nm to 600 nm,

In the context of the present invention, the density of the material may be determined according to the UNE-EN-ISO 1183-1:2019 standard through the method of water displacement based on the Archimedes principle, using a high precision balance and a density measurement kit. The relative density is calculated as the ratio between the material density and the solid polymeric material density, i.e., the density of the polymeric material before the foaming process.

The cellular structure of the nanocellular polymer material according to the invention may be evaluated by using scanning electron microscopy (SEM) and the analysis program of the cellular structure based on the free software Imaged. This technique also allows determining the cell size of the nanocellular polymer material.

The term "about" when used in the context of the present invention preceding a number and referring to it, is to be understood as designating any value lying within the range defined by the number ±5%, more preferably a range defined by the number ±2%. For example, the expression "about 10" should be construed as "within the range of 9.5 to 10.5", preferably "within the range of 9.8 to 10.2".

Through the description and the claims, the word "comprises" and variations thereof are not intended to exclude other technical features, ingredients or steps. Additional advantages and features of the invention will become apparent to those skilled in the art upon examination of the description or may be learned by practice of the invention without undue burden.

### EXAMPLES

In the following, the invention will be further illustrated by means of Examples and comparative Examples not part of the invention. These Examples should in no case be interpreted as limiting the scope of the invention, but only as an illustration of the invention.

### REAGENTS AND EQUIPMENT

Reagents used in the examples included below are the following:
Polymethylmethacrylate (PMMA PLEXIGLAS^{®} 7H) was supplied by Röhm with a melt flow index (MFI) of 0.77 g/10 min (measured at 230°C and 2.16 kg) and a glass transition temperature of 112°C, measured by DSC according to ISO 11357-1: 2018 in nitrogen atmosphere and at a heating rate of 10°C/min. The PMMA was extruded in sheets of 1 mm, 2 mm and 4 mm of thickness. Subsequently, the PMMA was cut into pieces of 20x20 mm² for the foaming assays.

Polystyrene (PS Styron 660HF) was supplied by Trinseo with a melt flow index (MFI) of 7 g/10 min (measured at 200°C and 5 kg) and a glass transition temperature of 120°C measured by DSC according to ISO 11357-1: 2018 in nitrogen atmosphere and at a heating rate of 10°C/min. The PS was extruded in sheets of 3 mm of thickness. Subsequently, the PS was cut into pieces of 20x20 mm² for the foaming assays.

CO₂ gas, Ar gas and N₂ gas with 99% purity were used as the foaming agents.

A high-pressure vessel (autoclave) adapted to work at a pressure up to 600 MPa and a temperature up to 140 °C designed and manufactured by Hiperbaric was used.

### Example 1: Comparative studies of different processes versus the process of the present invention

Different PMMA pieces of 20x20 mm² and 2 mm of thickness were foamed using CO₂ as foaming agent at the conditions indicated in tables 1a and 1b below.

Different values of pressure and temperature were assayed, and the cycle (also referred to as saturation time in this document), desorption and foaming times were measured for the different processes of producing a polymer materials: (1.1) a comparative process at medium pressure and low temperature (not part of the invention), (1.2) a comparative process at high pressure and low temperature (not part of the invention), (1.3) a comparative process at high pressure and high temperature (not part of the invention) and (1.4) a process according to the invention, also referred here as ultra-fast saturation process (Tables 1a and 1b and Figure 1).

**Table 1a. Process conditions for the saturation in the different foaming processes tested**

| | Pressure (MPa) | | Temperature (°C) | | Time (min) | |
|---|---|---|---|---|---|---|
| COMPARATIVE PROCESS (1.1) | 30 | | 25 | | 300 | |
| COMPARATIVE PROCESS (1.2) | 200 | | 25 | | 120 | |
| COMPARATIVE PROCESS (1.3) | 200 | | 80 | | 70 | |
| METHOD ACCORDING TO THE INVENTION (1.4) | Step a | Step b | Step a | Step b | Step a | Step b |
| | 200 | 200 | 80 | 25 | 35 | 35 |

For all these processes, the pressurization speed was 100 MPa/min. In the method according to the invention, the cooling rate from 80°C (Tₛₐₜ₁) to 25°C (Tₛₐₜ₂) was of 10°C/min. The time required to achieve Tₛₐₜ₂ is included within the saturation time of step b.

**Table 1b. Process conditions for the depressurization, foaming and stabilization steps of the different foaming processes tested**

| | Depressurization speed (MPa/s) | Desorption time (min) | T_{foam} (°C) | Foaming time (min) | Stabilization Temperature/ Time |
|---|---|---|---|---|---|
| COMPARATIVE PROCESS (1.1) | 100 | 10 | 100 | 2 | 25 °C / 10 min |
| COMPARATIVE PROCESS (1.2) | 200 | 10 | 100 | 2 | 25 °C / 10 min |
| COMPARATIVE PROCESS (1.3) | 200 | 10 | 100 | 2 | 25 °C / 10 min |
| METHOD ACCORDING TO THE INVENTION (1.4) | 200 | 10 | 100 | 2 | 25 °C / 10 min |

For all these processes, the foaming medium was a heated bath of boiling water (temperature 100°C) and the depressurization speed is determined between the final pressure of the saturation process and 25 MPa.

It was seen that the saturation was achieved after 70 min in the method according to the invention, also referred here as an ultra-fast saturation process, whereas for the remaining processes (not part of the invention) much longer times of 300 min and 120 min were needed. It is noteworthy that although the saturation time for the comparative process (1.3) was also 70 min, the amount of gas absorbed within the polymeric material was only about 32% (see Figure 2). Indeed, it was observed that in the method according to the invention, short saturation times of 70 minutes were sufficient for absorbing a 40 wt.% of CO₂ with respect to the weight of the saturated PMMA piece (see Figures 2 and 3).

Figure 3 shows also the gas absorption at saturation steps a) and b) according to the method of the invention. It was observed that during the pre-plastification step a) the amount of gas absorbed was of about 30 wt.% and this amount increased in the ultra-fast saturation step b) until about 40 wt.%, both amounts expressed by weight of CO₂ with respect to the weight of the saturated PMMA piece.

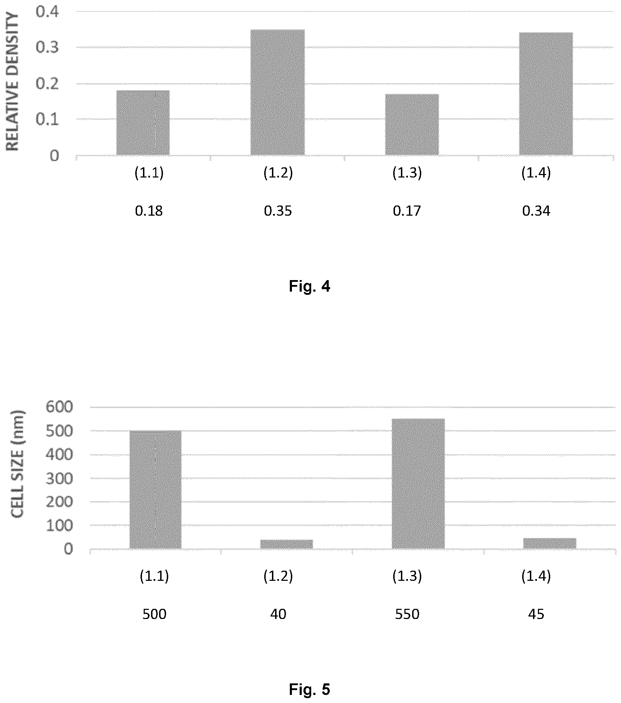

Moreover, it was seen that the ultra-fast saturation method according to the present invention allows obtaining a similar cellular structure than those obtained by the comparative process (1.2), i.e., that in which the saturation was carried out at high pressure and low temperature, with a significant reduction of the cycle time and, consequently, of the entire process (Figures 4 and 5). Indeed, a nanocellular polymer material having a relative density of about 0.35 and a cell size of 40 nm was obtained by the comparative process (1.2), whereas a nanocellular polymer material having a relative density of 0.34 and 45 nm was obtained by the method according to the invention (see Figures 4 and 5). Notwithstanding, the time needed to complete saturation for the comparative process (1.2) was of 120 min, whereas it was 70 min for the process at ultra-fast saturation according to the invention described herein, although this method comprises two different saturation steps.

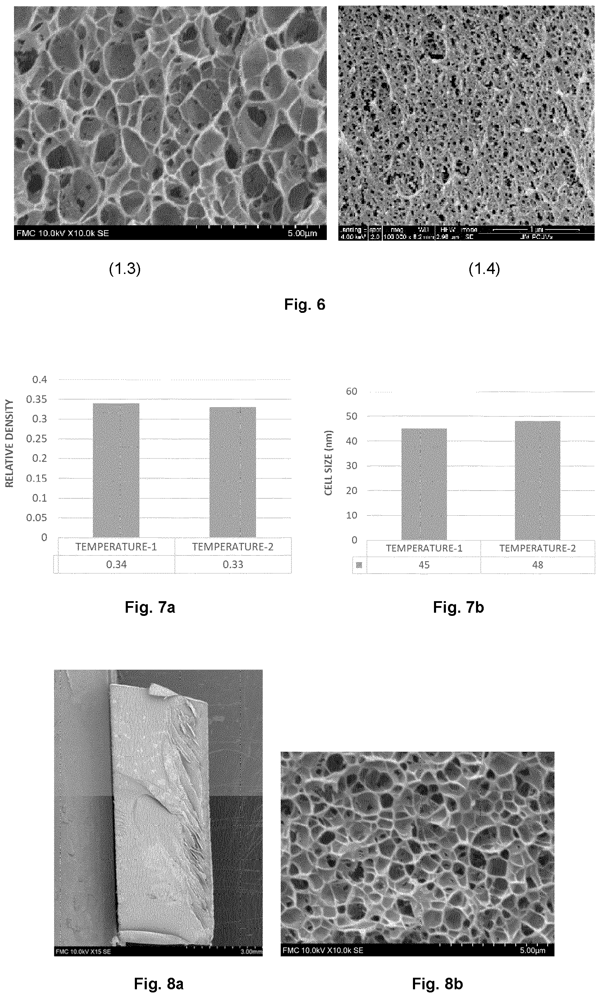

Figure 6 shows the SEM images of the cellular structure of the nanocellular polymer material obtained by the method according to the invention (1.4) and the comparative process (1.3). The cellular structure of the nanocellular polymer obtained by the method according to the invention was very similar to that obtained with the comparative process (1.2), i.e., that in which the saturation was carried out at high pressure and low temperature, but with a much shorter cycle time. Compared to the comparative processes (1.1) or (1.3), the method of the present invention allows reducing significantly the cell size, as evidenced in figure 5.

### Example 2: Effect of the temperature of the first saturation step a)

Different PMMA pieces of 20x20 mm² were subjected to a method according to the invention by spreading CO₂ as foaming agent within the PMMA pieces of 2 mm of thickness at two different saturation temperatures and the conditions of Table 2.

**Table 2. Saturation process conditions for the two processes of ultra-fast saturation.**

| | Pressure (MPa) | | Temperature (°C) | | Time (min) | |
|---|---|---|---|---|---|---|
| | Step a | Step b | Step a | Step b | Step a | Step b |
| Temperature Test-2.1 | 200 | 200 | 80 | 25 | 35 | 35 |
| Temperature Test-2.2 | 200 | 200 | 90 | 25 | 30 | 20 |

In both tests, the pressurization speed was 100 MPa/min, the cooling rate from the saturation temperature of step a) (Tₛₐₜ₁) to 25°C (Tₛₐₜ₂) was of 10°C/min and the time required to achieve Tₛₐₜ₂ is included within the saturation time of step b. Additionally, the depressurization rate was 200 MPa/s, determined between the final pressure of the saturation process (i.e., 200 MPa) and 25 MPa, the desorption time was 10 minutes, the foaming temperature was 100°C, more specifically, the foaming medium was a heated bath of boiling water (temperature 100°C), the foaming time was 2 minutes, and a stabilization step was carried out at a temperature of 25°C for a period of 10 minutes.

It was seen that the increase in the temperature of the first step from about 80°C for the process of test (2.1) to about 90°C for the process of test (2.2) decrease the cycle time from about 70 min to about 50 min, that is, a decrease of about 30%. Notwithstanding, the cellular structures were similar at both temperatures since the nanocellular polymer materials obtained therein had relative density values of 0.33-0.34 and cell sizes of 45-48 nm (see Figure 7). Then, we conclude that the process presented in this invention can be adjusted to reduce even further the cycle time without compromising the cellular structure of the resultant materials. Increasing the temperature of step (a) allows reducing the cycle time keeping the same final material (that is, similar density and cell size).

### Example 3. Production of PMMA nanocelular polymeric material with low density

Different PMMA pieces of 20x20 mm² were subjected to a method according to the invention by spreading CO₂ as foaming agent within the PMMA pieces of 4 mm of thickness at the saturation conditions indicated in Table 3.

**Table 3. Process conditions for the process of ultra-fast saturation.**

| Pressure (MPa) | | Temperature (°C) | | Time (min) | |
|---|---|---|---|---|---|
| Step a | Step b | Step a | Step b | Step a | Step b |
| 170 | 170 | 80 | 38 | 140 | 48 |

The pressurization speed was 100 MPa/min, the cooling rate from 80 °C (Tₛₐₜ₁) to 38°C (Tₛₐₜ₂) was of 10°C/min and the time required to achieve Tₛₐₜ₂ is included within the saturation time of step b. Additionally, the depressurization rate was 60 MPa/s, determined between the pressure of the saturation step b) (i.e., 170 MPa) and 25 MPa, the desorption time was 10 minutes, the foaming temperature was 100°C, more specifically, the foaming medium was a heated bath of boiling water (temperature 100°C), the foaming time was 3 minutes, and a stabilization step was carried out at a temperature of 25°C for a period of 10 minutes.

It is worth noting that saturation times required in this test were higher than the those reported in the previous examples due to the thickness of the starting solid polymeric material (PMMA), 4 mm instead of 2 mm as in Examples 1 and 2 (see above).

Results show that it is possible to achieve low-density foams, with relative density of 0.1 and cell sizes of 515 nm. Figure 8a shows an image of a cut of the sample through the thickness, in which it can be observed that the sample is totally homogeneous and has a final thickness of more than 8 mm after expansion. Figure 8b shows details of the cellular structure of this low-density nanocellular polymeric material.

### Example 4. Production of PMMA nanocellular polymeric material with argon (Ar)

Different PMMA pieces of 20x20 mm² and 1 mm of thickness were foamed using (Ar) as foaming agent at the saturation conditions indicated in table 4 below.

Different values of pressure and temperature were assayed, and the cycle (also referred to as saturation time in this document), desorption and foaming times were measured for the different processes of producing polymer foams: (4.1) a comparative process at high pressure and high temperature (not part of the invention) and (4.2) a method according to the invention, also referred here as ultra-fast saturation process (Table 4).

**Table 4. Saturation process conditions for the different foaming processes tested**

| | Pressure (MPa) | | Temperature (°C) | | Time (min) | |
|---|---|---|---|---|---|---|
| COMPARATIVE PROCESS (4.1) | 200 | | 78 | | 600 | |
| METHOD ACCORDING TO THE INVENTION (4.2) | Step a | Step b | Step a | Step b | Step a | Step b |
| | 200 | 200 | 100 | 80 | 180 | 120 |

In the method according to the invention, the cooling rate from 100°C (Tₛₐₜ₁) to 80°C (Tₛₐₜ₂) was of 10°C/min and the time required to achieve Tₛₐₜ₂ is included within the saturation time of step b.

Additionally, in both tests, the pressurization speed was 100 MPa/min, the depressurization rate was 150 MPa/s, determined between the final pressure of the saturation process (i.e., 200 MPa) and 25 MPa, the desorption time was 10 minutes, the foaming temperature was 120°C, more specifically, the foaming medium was a heated bath of silicone (temperature 120°C), the foaming time was 1 minutes, and a stabilization step was carried out at a temperature of 25°C for a period of 10 minutes.

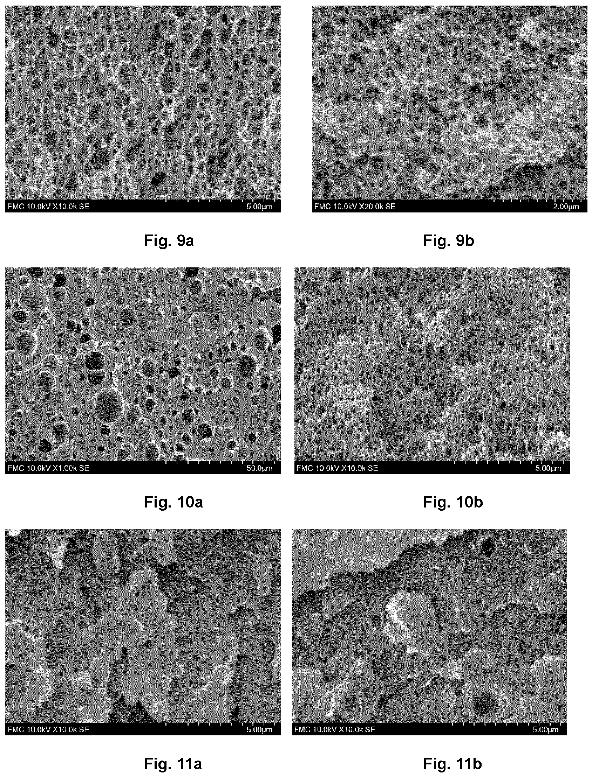

Results show that with the comparative process (4.2) at high pressure and high temperature a very large saturation time (10 h) is needed to fully saturate the PMMA samples with 1 mm in thickness. The result of test (4.1) is a foam with a relative density of 0.56 and a cell size of 435 nm (see the cellular structure in Figure 9a). When the method of the present invention is applied, it is possible to reduce the cycle time from 10 h to 5 h (reduction of 50%). The result of test (4.2) is a nanocelular polymeric material with a relative density of 0.44 and a cell size of 125 nm (see the cellular structure in Figure 9b). So in this case the use of the method developed in the present invention not only allows a reduction of the cycle time, but also reduces the density and the cell size. This example also proves that the method can be extended to other foaming agents such as argon.

### Example 5. Production of PS nanocellular polymeric material with argon (Ar)

Different PS pieces of 20x20 mm² and 3 mm of thickness were foamed using (Ar) as foaming agent at the saturation conditions indicated in table 5 below.

Different values of pressure and temperature were assayed, and the cycle (also referred to as saturation time in this document), desorption and foaming times were measured for the different processes of producing polymer foams: (5.1) comparative process at high pressure and high temperature (not part of the invention) and (5.2) a process according to the invention, also referred here as ultra-fast saturation process (Table 5).

**Table 5. Saturation process conditions for the different foaming processes tested**

| | Pressure (MPa) | | Temperature (°C) | | Time (min) | |
|---|---|---|---|---|---|---|
| COMPARATIVE PROCESS (5.1) | 200 | | 75 | | 420 | |
| METHOD ACCORDING TO THE INVENTION (5.2) | Step a | Step b | Step a | Step b | Step a | Step b |
| | 200 | 200 | 100 | 80 | 120 | 60 |

In the method according to the invention, the cooling rate from 100°C (Tₛₐₜ₁) to 80°C (Tₛₐₜ₂) was of 10°C/min. The time required to achieve Tₛₐₜ₂ is included within the saturation time of step b.

Additionally, in both tests, the pressurization speed was 100 MPa/min, the depressurization rate was 150 MPa/s, determined between the final pressure of the saturation process (i.e., 200 MPa) and 25 MPa, the desorption time was 10 minutes, the foaming temperature was 130°C, more specifically, the foaming medium was an air circulating oven at a temperature of 130 °C, the foaming time was 1.5 minutes, and a stabilization step was carried out at a temperature of 25°C for a period of 10 minutes.

Results show that with the comparative process (5.1) at high pressure and high temperature a very large saturation time (7 h) is needed to fully saturate the PS samples with 3 mm in thickness. The result of test (5.1) is a foam with a relative density of 0.82 and a cell size of 5 microns (see the cellular structure in Figure 10a). When the method of the present invention is applied, it is possible to reduce the cycle time from 7 h to 3 h. The result of test (5.2) is a foam with a relative density of 0.78 and a cell size of 180 nm (see the cellular structure in Figure 10b). So, in this case the use of the method of the present invention not only allows a reduction of the cycle time, but also reduces the cell size quite significantly, allowing to pass from a microcellular structure to a nanocellular structure.

### Example 6. Production of PMMA nanocelular polymeric material with nitrogen (N₂)

Different PMMA pieces of 20x20 mm² and 1 mm of thickness were foamed using N₂ as foaming agent at the saturation conditions indicated in table 6 below.

Different values of pressure and temperature were assayed, and the cycle (also referred to as saturation time in this document), desorption and foaming times were measured for the different processes of producing polymer foams: (6.1) a comparative process at high pressure and high temperature (not part of the invention) and (6.2) a process according to the invention, also referred here as ultra-fast saturation process (Table 6).

**Table 6. Process conditions for the different foaming processes tested**

| | Pressure (MPa) | | Temperature (°C) | | Time (min) | |
|---|---|---|---|---|---|---|
| COMPARATIVE PROCESS (6.1) | 200 | | 75 | | 660 | |
| METHOD ACCORDING TO THE INVENTION (6.2) | Step a | Step b | Step a | Step b | Step a | Step b |
| | 200 | 200 | 100 | 80 | 180 | 120 |

In the method according to the invention, the cooling rate from 100°C (Tₛₐₜ₁) to 80°C (Tₛₐₜ₂) was of 10°C/min. The time required to achieve Tₛₐₜ₂ is included within the saturation time of step b.

Additionally, in both tests, the pressurization speed was 100 MPa/min, the depressurization rate was 150 MPa/s, determined between the final pressure of the saturation process (i.e., 200 MPa) and 25 MPa, the desorption time was 10 minutes, the foaming temperature was 120°C, more specifically, the foaming medium was a heated bath of silicone at 120°C, the foaming time was 1 minutes, and a stabilization step was carried out at a temperature of 25°C for a period of 10 minutes.

Results show that with the comparative process (6.1) at high pressure and high temperature a very large saturation time (11 h) is needed to fully saturate the PMMA samples with 1 mm in thickness. The result of test (6.1) is a foam with a relative density of 0.70 and a cell size of 176 nm (see the cellular structure in Figure 11a). When the method of the present invention is applied, it is possible to reduce the cycle time from 11 h to 5 h. The result of test (6.2) is a foam with a relative density of 0.54 and a cell size of 155 nm (see the cellular structure in Figure 10b). So, in this case the use of the method developed in the present invention not only allows a reduction of the cycle time, but also reduces the density significantly in comparison with the comparative method. This example also proves that the method can be extended to other foaming agents such as nitrogen.

## Claims

1. A method of producing a nanocellular polymer material by gas dissolution foaming, **characterized in that** said method comprises:
a) a first saturation step of a solid polymeric material with a foaming agent at a pressure of about 35 MPa to about 600 MPa and a first saturation temperature (Tₛₐₜ₁) of about T_{g/m} - 40°C to about T_{g/m} + 40°C;
b) a second saturation step of the polymeric material of step a) with a foaming agent at a pressure of about 35 MPa to about 600 MPa and a second saturation temperature (Tₛₐₜ₂) of about -40°C to about 200°C, with the proviso that said second saturation temperature (Tₛₐₜ₂) is below T_{eff} and below the first saturation temperature (Tₛₐₜ₁) of step a);
c) dropping the pressure of the previous step, wherein the pressure drop speed between the pressure of the previous step and 25 MPa is equal to or higher than about 10 MPa/s, preferably of about 10 MPa/s to about 600 MPa/s;
d) heating the polymeric material of step c) at a temperature (T_{foam}) of about T_{eff} - 20°C to about T_{eff} + 150°C, preferably of about T_{eff} to about T_{eff} + 150°C, thereby a nanocellular polymer material is produced; and
e) optionally, adjusting the temperature of the nanocellular polymer material to a temperature of about 0 °C to about 30 °C, thereby a stabilized nanocellular polymer material is produced;
wherein
- T_{g/m} corresponds to the glass transition temperature (T_{g}) or the melting temperature (Tₘ) of the solid polymeric material, determined by Differential Scanning Calorimetry (DSC) according to ISO13557-1:2018, in nitrogen atmosphere and at a heating rate of 10°C/min; and
- T_{eff} corresponds to the effective glass transition temperature (T_{g,eff}) or the effective melting temperature (T_{m,eff}) of the polymeric material once the saturation step b) is deemed to be finished, determined as defined in the description.

2. The method of claim 1, wherein the solid polymeric material has a thickness or diameter of equal to or greater than about 1 mm, preferably equal to or greater than about 2 mm, more preferably equal to or greater than about 4 mm, even more preferably of about 4 mm to about 6 mm.

3. The method of any one of the preceding claims, wherein the solid polymeric material comprises a primary component which comprises
- an amorphous polymer selected from the group consisting of polymethylmethacrylate (PMMA), polystyrene (PS), polyetherimide (PEI), polycarbonate (PC), polyvinyl chloride (PVC), polysulfone (PSU), thermoplastic starch (TPS), natural rubber (NR) and combinations thereof; and/ or
- a semicrystalline polymer selected from the group consisting of low-density polyethylene (LDPE), high-density polyethylene (HPDE), ethylene vinyl acetate (EVA) and polypropylene (PP), polyamide (PA), polyethylene terephthalate (PET), polylactic acid (PLA), polybutylene adipate terephthalate (PBAT), polybutylene succinate (PBS), polyhyroxyalkanoate (PHA), thermoplastic elastomers such as thermoplastic polyurethane (TPU), thermoplastic polyolefin (TPO) and thermoplastic polyester polyamide (PEBA), and a combination thereof;
preferably the solid polymeric material comprises an amorphous polymer selected from polymethylmethacrylate (PMMA) and polystyrene (PS).

4. The method of any one of the preceding claims, wherein the solid polymeric material comprises at least 50 % by weight of an amorphous or semicrystalline polymer with respect to the total weight of the solid polymeric material.

5. The method of any one of the preceding claims, wherein the foaming agent is selected from the group consisting of carbon dioxide, nitrogen, argon, isobutane, n-butane, other hydrocarbons, chlorofluorocarbons (CFCs), hydroclorofluorocarbons (HCFCs), hydrofluorocarbons (HFCs), dimethyl eter (DME), methyl formate (MF), ethanol, hydrofluoroolefins (HFO) and combinations thereof; preferably the foaming agent is carbon dioxide, nitrogen, argon, or combinations thereof.

6. The method of any one of the preceding claims, wherein the steps a) and/or b) are carried out at a pressure of about 50 MPa to about 400 MPa; preferably of about 100 MPa to about 200 MPa.

7. The method of any one of the preceding claims, wherein, in step c), the pressure drop between the pressure of the previous step and 25 MPa is carried out at a speed of about 10 MPa/s to about 600 MPa/s, more preferably of about 100 MPa/s to about 300 MPa/s.

8. The method of any one of the preceding claims, wherein the step d) starts not more than 60 min after the step c) has been deemed to be finished; preferably not more than 30 min, more preferably not more than 15 min.

9. The method of any one of the preceding claims, wherein the solid polymeric material further comprises at least one nucleating agent selected from the group consisting of nanoparticles, a second polymer different from the primary component and a combination thereof.

10. The method of claim 9, wherein the nanoparticles are selected from the group consisting of nanoclay, nanosilica, nanometric sepiolites and nanofibers; and/or the second polymer is selected from the group consisting of acrylic block copolymers, styrenic block copolymers and thermoplastic elastomers.

11. The method of any one of the preceding claims, wherein the solid polymeric material further comprises at least one additive selected from an infrared radiation blocker, a flame retardant, a reinforcing additive and a combination thereof.

12. The method of claim 11, wherein the infrared radiation blocker is selected from graphite, graphene, silicon carbide, carbon nanotubes, titanium oxide and a combination thereof.

13. The method of any one of the preceding claims, wherein the solid polymeric material comprises polymethylmethacrylate (PMMA), and the method comprises:
a) a first saturation step of the solid polymeric material with a foaming agent which is carbon dioxide, argon or nitrogen, at a pressure of about 35 MPa to about 600 MPa, and a first saturation temperature (Tₛₐₜ₁) of about 72 °C to about 152 °C;
b) a second saturation step of the polymeric material of step a) with a foaming agent which is carbon dioxide, argon or nitrogen, at a pressure of about 35 MPa to about 600 MPa, and a second saturation temperature (Tₛₐₜ₂) of about -40 °C to about 100 °C, with the proviso that said second saturation temperature (Tₛₐₜ₂) is below T_{eff} and below the first saturation temperature (Tₛₐₜ₁) of step a);
c) dropping the pressure of step b), wherein the pressure drop speed between the pressure of step b) and 25 MPa is equal to or higher than about 10 MPa/s, preferably of about 10 MPa/s to about 600 MPa, more preferably of about 100 MPa/s to about 300 MPa/s;
d) heating the polymeric material of step c) at a temperature (T_{foam}) of about 80 °C to about 120 °C, thereby a nanocellular polymer material is produced; and
e) optionally, adjusting the temperature of the nanocellular polymer material to a temperature of 0 °C to 30 °C, whereby a stabilized nanocellular polymer material is produced;
wherein T_{eff} corresponds to the effective glass transition temperature (T_{g,eff}) or the effective melting temperature (T_{m, eff}) of the polymeric material once the saturation step b) is deemed to be finished, determined as defined in the description.

14. The method of any one of claims 1-12, wherein the solid polymeric material comprises polystyrene (PS), and the method comprises:
a) a first saturation step of the solid polymeric material with a foaming agent which is argon, at a pressure of about 35 MPa to about 600 MPa, and a first saturation temperature (Tₛₐₜ₁) of about 60 °C to about 140 °C;
b) a second saturation step of the polymeric material of step a) with a foaming agent with is argon, at a pressure of about 35 MPa to about 600 MPa, and a second saturation temperature (Tₛₐₜ₂) of about 70 °C to about 120 °C, with the proviso that said second saturation temperature (Tₛₐₜ₂) is below T_{eff} and below the first saturation temperature (Tₛₐₜ₁) of step a);
c) dropping the pressure of step b), wherein the pressure drop speed between the pressure of step b) and 25 MPa at a speed equal to or higher than about 10 MPa/s, preferably of about 10 MPa/s to about 600 MPa/s; more preferably of about 100 MPa/s to about 300 MPa/s;
d) heating the polymeric material of step c) at a temperature (T_{foam}) of about 100 °C to about 140 °C, thereby a nanocellular polymer material is produced; and
e) optionally, adjusting the temperature of the nanocellular polymer material to a temperature of 0 °C to 30 °C, whereby a stabilized nanocellular polymer material is produced;
wherein T_{eff} corresponds to the effective glass transition temperature (T_{g,eff}) or the effective melting temperature (T_{m,eff}) of the polymeric material once the saturation step b) is deemed to be finished, determined as defined in the description.
